# EUROPEAN PATENT APPLICATION

(11) **EP 4 575 592 A1**
(43) Date of publication of application: **25.06.2025**
(21) Application number: 23219890.3
(22) Date of filing: 22.12.2023
(51) Int. Cl.: G02B 1/00, G02B 5/18

(54) **OPTICAL COMPONENT AND METHOD OF MANUFACTURE**

(71) Applicant: Sensirion AG, 8712 Stäfa (CH)
(72) Inventor: LEITIS, Aleksandrs, 8706 Meilen (CH); GÜTLE, Frank, 79865 Grafenhausen (DE); RÜTHEMANN, Lukas, 8050 Zürich (CH); MITTERMÜLLER, Marcel, 8005 Zürich (CH)
(74) Representative: Detken, Andreas

(57) **Abstract**

An optical component (11) comprises a carrier substrate (13), a cavity (14) formed in the carrier substrate (13), and a layer stack forming a membrane (15) having a cavity-spanning portion that spans the cavity (14) at its upper end. A stray light modifying element (20) is provided for modifying stray light traveling laterally through the layer stack. The stray light modifying element (20) comprises an anti-lightguide surface structure formed in or on at least one surface selected from the upper surface of the carrier substrate (13) and the upper and lower surfaces of the material layers of the layer stack, the anti-lightguide surface structure being configured to reduce specular reflections of the stray light at the selected surface.

## Description

### TECHNICAL FIELD

The present invention relates to an optical component and to a method of manufacturing an optical component.

### BACKGROUND

Optical components are used in a wide range of illumination and/or sensing applications. An optical component may comprise at least one optical element for manipulating light, such as a lens, and a carrier for the at least one optical element. Optical components may be integrated into optoelectronic modules comprising optoelectronic components such as light sources and light detectors.

For example, smartphones can comprise a lighting module and one or more camera modules. The lighting module may comprise a light source such as a light emitting diode (LED) and one or more optical components for shaping the light that is emitted by the light source. The camera module may comprise an image sensor and one or more optical components for focusing light that is received from a desired viewing direction towards the image sensor. Additional optoelectronic modules may be present for determining ambient lighting conditions, for implementing face recognition, for proximity sensing and for other purposes.

One challenge with optoelectronic modules is how to reduce stray light leakage from the light source into directions other than a desired range of directions of illumination and to prevent stray light from reaching the light detector from directions other than the desired viewing direction.

### SUMMARY OF THE INVENTION

In a first aspect, it is an object of the present invention to provide an optical component for which the amount of stray light that can travel through the optical component along directions other than a desired range of directions is reduced.

These and other objects are achieved by an optical component comprising:
a carrier substrate, the carrier substrate preferably comprising a semiconductor material;
a cavity formed in the carrier substrate, the cavity having a lower end and an upper end;
a layer stack comprising at least one material layer arranged on an upper surface of the carrier substrate, each material layer extending essentially parallel to a lateral plane and having a lower surface facing the carrier substrate and an upper surface facing away from the carrier substrate, at least one of the material layers forming a membrane having a cavity-spanning portion that spans the cavity at its upper end; and
a stray light modifying element configured to modify stray light traveling laterally through the layer stack,
wherein the stray light modifying element comprises or consists of an anti-lightguide surface structure formed in or on at least one surface selected from the upper surface of the carrier substrate and the upper and lower surfaces of the material layers of the layer stack, the anti-lightguide surface structure being configured to reduce specular reflections of the stray light at the selected surface.

In the absence of the anti-lightguide surface structure, stray light having a small grazing angle relative to the lateral plane may be able to propagate laterally through the layer stack by multiple specular reflections at the various surfaces between the carrier substrate and the lowermost material layer, between the material layers themselves, and between the uppermost material layer and the environment. In other words, in the absence of the anti-lightguide surface structure, the layer stack may act as a light guide for the stray light. By providing an anti-lightguide surface structure on at least one of these surfaces, specular reflections of the stray light at the selected surface can be substantially reduced. As a result, the amount of light that is able to laterally propagate through the layer stack can be substantially reduced, and the layer stack is therefore prevented from acting as a light guide.

The entire stray light modifying element or at least its anti-lightguide surface structure preferably is a generally planar structure extending essentially parallel to the lateral plane across a substantial surface area in the lateral plane. The anti-lightguide surface structure is preferably structured (e.g., textured), i.e., the anti-lightguide surface structure is preferably not simply a smooth, continuous layer. The anti-lightguide surface structure may also be termed an "anti-lightguide surface modification" or "anti-lightguide surface structuring". The minimum dimensions of the anti-lightguide surface structure in the lateral plane are preferably at least 10 times its maximum dimension perpendicular to the lateral plane, preferably at least 20 times said maximum dimension. For example, if the anti-lightguide surface structure is a surface roughening having a maximum roughening depth of 5 µm or a black Si layer having a thickness of 5 µm, the anti-lightguide surface structure preferably extends across an area of at least 50 µm x 50 µm.

The stray light modifying element may modify the stray light by one or more physical phenomena including refraction, diffraction, scattering and/or absorption of the stray light that impinges onto the anti-lightguide surface structure.

In some embodiments, the stray light modifying element, in particular, its anti-lightguide surface structure, may act to deflect or diffusely scatter the stray light such that at least a portion of the stray light, after interaction with the anti-lightguide surface structure, propagates away from the lateral plane. In this manner, stray light can be diverted either into the carrier substrate, where it is effectively absorbed, or into the environment away from the optical component. In some embodiments, the stray light modifying element may itself be configured to absorb the stray light that impinges on it.

In some embodiments, the anti-lightguide surface structure is formed within the selected surface. In other words, the anti-lightguide surface structure may be a surface modification of the respective surface itself (e.g., a surface modification of the upper surface of the carrier substrate, which may be created by etching the upper surface prior to disposing the membrane onto the upper surface, or a surface modification of the upper surface of the membrane, which may be created by etching the membrane after the membrane has been deposited onto the carrier substrate). In other embodiments, the anti-lightguide surface structure may comprise at least one dedicated structured layer disposed on the respective surface (e.g., a micro- or nanostructured metal layer disposed on the upper surface of the carrier substrate or on the upper surface of the membrane), the structured layer thus acting as a surface modification that modifies the underlying surface. Examples will be provided below.

The anti-lightguide surface structure may be formed in or on at least a portion of the respective surface in a region that surrounds the cavity. The anti-lightguide surface structure may fully surround the cavity, or it may only partially surround the cavity to selectively allow lateral propagation of a portion of the stray light along at least one predetermined lateral direction. This may allow a portion of the stray light to be used, e.g., for monitoring properties of a light source that may be disposed in the cavity, e.g., its luminous power or its spectral properties.

In some embodiments, the anti-lightguide surface structure is a meta-optical surface structure, as defined in more detail below. The meta-optical surface structure may comprise a two-dimensional array of discrete structural elements, which may be similarly shaped. The structural elements may have elongated shape along a height direction perpendicular to the lateral plane. They then preferably all have essentially the same length in the height direction. In some embodiments, the structural elements may be configured to cause a refractive index gradient, whereby the refractive index continuously decreases away from the carrier substrate. To this end, the structural elements may taper away from the carrier substrate along the height direction. The refractive index gradient may cause stray light that impinges onto the meta-optical surface structure at oblique angles to be purposefully deflected towards the carrier substrate, where it is absorbed.

In some embodiments, the stray light modifying element is a meta-optical absorber comprising:
a dielectric layer;
a first metal layer on a first surface of the dielectric layer, the first metal layer being structured to comprise a plurality of resonators; and
a second metal layer arranged on a second surface of the dielectric layer.

The first surface may be the upper surface of the dielectric layer, and the second surface may be its lower surface. In this case, the structured first metal layer is an upper metal layer, and the second metal layer is a lower metal layer. However, it is also possible that the first surface is the lower surface and the second surface the upper surface. The dielectric layer and the metal layers of the meta-optical absorber will generally be part of the layer stack. In preferred embodiments, the dielectric layer is identical with the membrane or is part of the membrane, i.e., the dielectric layer is preferably formed by at least one of the material layers that form the membrane. However, the dielectric layer may also be a separate layer.

In order to reduce the dependence of the performance of the meta-optical absorber on the grazing angle, it is advantageous that the dielectric layer is thinner than the cavity-spanning portion of the membrane. The structured first metal layer of the meta-optical absorber may be considered a meta-optical surface structure.

In some embodiments, the anti-lightguide surface structure is formed in or on the upper surface of the carrier substrate. In particular, the anti-lightguide surface structure may comprise a surface texturing in or on at least a portion of the upper surface of the carrier substrate. The surface texturing may comprise a regular or irregular arrangement of structural elements for interaction with the stray light. The arrangement of the structural elements may be random or may be predetermined. In some embodiments, the structural elements have lateral dimensions that are smaller than a design wavelength of the optical component. In some embodiments, the structural elements have lateral dimensions below 1 µm.

For example, the anti-lightguide surface structure may comprise a roughening of at least a portion of the upper surface of the carrier substrate to diffusely scatter the stray light into a range of directions including directions away from the lateral plane. The roughening may be irregular, comprising a random arrangement of randomly sized structural elements that interact with the stray light. The roughening may be created by grinding or by selectively etching at least a portion of the upper surface of the carrier substrate, in particular, by a wet etching process like KOH etching.

As another example, the anti-lightguide surface structure may comprise a meta-optical surface structure formed in or on the upper surface of the carrier substrate. The meta-optical surface structure may be formed in the carrier substrate itself, e.g., by etching, or it may be formed on the upper surface by structuring a dedicated material layer of the layer stack. For example, a layer of amorphous silicon may be disposed on the upper surface of the carrier substrate and may be structured to form a meta-optical surface structure on the upper surface of the carrier substrate. A meta-optical surface structure may be considered a special case of a surface texturing.

In some embodiments, the anti-lightguide surface structure may be a black silicon modification in or on the upper surface of the carrier substrate. More specifically, the carrier substrate may comprise silicon, the upper surface being a silicon surface, and the black silicon modification may be formed directly in the carrier substrate. In other embodiments, the black silicon modification may be formed in a separate silicon layer arranged on the upper surface of the carrier substrate. A black silicon modification may be regarded as a special case of a meta-optical surface modification.

In some embodiments, the stray light modifying element comprises an anti-lightguide surface structure formed in or on the upper surface of the membrane. In particular, the anti-lightguide surface structure may comprise a surface texturing in or on at least a portion of the upper surface of the membrane, e.g., in the form of a roughening of the upper surface of the membrane or in the form of a structured material layer disposed on the upper surface of the membrane. The anti-lightguide surface structure may again be a meta-optical surface structure. In some embodiments, the membrane may comprise a plurality of layers, and a layer of the membrane itself, in particular, an upper and/or lower layer of the membrane, may be structured to form the anti-lightguide surface structure. It may be advantageous to configure the membrane to be thinner in a region in which the anti-lightguide surface structure is formed than in the cavity-spanning portion itself. This may be advantageous not only in cases where the stray light modifying element is a meta-optical absorber, but also in other cases.

In some embodiments, the optical component comprises an optical element formed in or on the membrane, the optical element configured to shape, diffuse, filter, and/or otherwise adjust light that impinges on the cavity-spanning portion of the membrane, in particular, light at the design wavelength. The optical element may be, for example, a refractive, diffractive or meta-optical element. In some embodiments, the optical element is arranged on the membrane and comprises a base layer that laterally extends beyond the cavity-spanning portion of the membrane. The base layer may then be considered one of the layers of the layer stack. The stray light modifying element may then comprise an anti-lightguide surface structure formed in the outer surface of the base layer, the surface structure configured to facilitate escape of the stray light from the base layer. The base layer may comprise or consist of a polymer. The anti-lightguide surface structure may be formed by imprinting the polymer base layer. In some embodiments, also the optical element is formed by imprinting the polymer base layer, preferably in a single imprinting operation.

In particular, the anti-lightguide surface structure in the outer surface of the base layer may comprise a plurality of step-like structures, e.g., sawtooth-shaped step-like structures, each step-like structure having a face that is oriented relative to the lateral plane at an angle to allow stray light travelling in a direction that is essentially parallel to the lateral plane to escape from the base layer. The angle may be at least 45°, preferably at least 60°, more preferably at least 75°. In particular, the face may be essentially perpendicular to the lateral plane. In other words, the face may have a surface normal that is essentially parallel to the lateral plane, having an angle to the lateral plane of not more than 15°. In the alternative or in addition, the anti-lightguide surface structure in the outer surface of the base layer may comprise a diffuser structure, in particular, a diffractive diffuser structure or a roughening, the diffuser structure configured to diffusely scatter the stray light into a plurality of different directions outside the base layer.

In some embodiments, the optical component is only a passive component. In particular, the optical component may be free of any integrated semiconductor circuitry. In other embodiments, the optical component is an active component that comprises integrated semiconductor circuitry, in particular, CMOS circuitry. In particular, the optical component may comprise at least one light detector that is integrated at least partially within the upper surface of the carrier substrate. In order to protect the light detector from stray light, it may then be advantageous if the stray light modifying element is arranged between the cavity-spanning portion of the membrane and the light detector when viewed in a projection onto the lateral plane.

The optical component may be combined with one or more optoelectronic components to form an optoelectronic module. In some embodiments, the optoelectronic module may comprise:
a base substrate;
an optoelectronic device for emitting or detecting light, the optoelectronic device being disposed on the base substrate; and
the optical component of the first aspect,
wherein the optoelectronic device is arranged in the cavity and/or faces the optical element of the optical component through the cavity.

In some embodiments, the optoelectronic device may be a light detector, in particular, an image detector or a camera. In other embodiments, the optoelectronic device may be a light source, in particular, an LED or a laser. The optoelectronic device may be configured to emit or detect light having the design wavelength of the optical component.

In some embodiments, the optoelectronic device comprises a light source arranged in the cavity of the optical component, the light source adapted to emit a light beam towards the optical element of the optical component to define a detection volume outside the cavity if the light source is turned on, and the optical component comprises a light detector that is integrated at least partially within the upper surface of the carrier substrate, wherein the upper surface faces the detection volume, and wherein the light detector is adapted to detect light scattered in the detection volume. As explained above, it is then advantageous is the stray light modifying element is arranged between the cavity-spanning portion of the membrane and the light detector with respect to the lateral plane.

In some embodiments, the optoelectronic module comprises a detector chip, the detector chip having a detector chip cavity and comprising a light detector that is integrated into an upper surface of the detector chip. The optical component, which may be a component separate from the detector chip, may then be arranged on the upper surface of the detector chip in such a manner that the cavity of the optical component is aligned with the detector chip cavity along the height direction. The optoelectronic device may be a light source. The detector chip is then arranged relative to the light source in such a manner that light emitted from the light source is able to reach the optical element of the optical component through the detector chip cavity and the cavity of the optical component.

In a second aspect, a method of manufacturing the optical component of the first aspect is provided. The method may comprise the following steps, which do not need to be carried out in this order:
providing a wafer comprising the carrier substrate;
creating, on the wafer, the layer stack, the stray light modifying elements and, optionally, the optical elements of the optical components;
etching the wafer from a lower surface of the wafer to form an array of cavities spanned by the membrane; and
dicing the wafer to obtain the plurality of optical components.

The steps of creating the stray light modifying elements and/or optical elements may be carried out before or after the cavities are formed.

The method may further comprise, before the step of dicing, a step of grinding the wafer at its lower surface to reduce a thickness of the carrier substrate. This step may advantageously be carried out before the cavities are formed.

In some embodiments, the method further comprises, before the step of dicing, a step of removing part of the membrane laterally outside the cavity-spanning portion such that the membrane covers only part of the upper surface of the carrier substrate.

The method may comprise, before the step of dicing, a step of bonding the carrier substrate to a base substrate that carries a plurality of optoelectronic components, such that at least one of the optoelectronic components is received in each cavity of the carrier substrate.

The wafer may comprise an etch-stop layer between the carrier substrate and the membrane. After the step of etching the substrate, the etch stop layer inside each cavity may then be selectively etched away to expose the cavity-spanning portion of the membrane.

The wafer may be a silicon-on-insulator wafer comprising a carrier substrate made of silicon, an insulating layer on top of the carrier substrate, and a silicon layer on top of the insulating layer. The method may comprise, after the step of etching the wafer, a step of selectively etching the insulating layer inside each cavity away to expose the cavity-spanning portion of the membrane.

In some embodiments, creating the stray light modifying elements of the optical components comprises etching or grinding at least a portion of the upper surface of the carrier substrate and/or etching or grinding at least a portion of the upper surface of one of the material layers of the layer stack to create the anti-lightguide surface structure. Etching can be carried out using a wet etching method, e.g., KOH etching or MACE, or a dry etching method, e.g., RIE or DRIE.

In some embodiments, the method comprises forming an optical element on the membrane, the optical element configured to shape, diffuse, filter, and/or otherwise adjust light that impinges on the cavity-spanning portion of the membrane, the optical element comprising a base layer having a lower surface facing the membrane and having an upper surface facing away from the membrane, and forming the anti-lightguide surface structure comprises imprinting the base layer to create the anti-lightguide surface structure.

### BRIEF DESCRIPTION OF THE DRAWINGS

Embodiments of the present technology are described in the following with reference to the drawings, which are for the purpose of illustrating the present technology and not for the purpose of limiting it. In the drawings,
FIG. 1 illustrates an optoelectronic module without a stray light modifying element;
FIG. 2 illustrates an optoelectronic module that includes a stray light modifying element;
FIG. 3 illustrates an enlarged view of a portion of the optoelectronic module in FIG. 2;
FIGS. 4A to 4F illustrate a method of manufacturing a plurality of optical components according to an embodiment;
FIG. 5 illustrates an optical component that includes a meta-optical element arranged on top of the membrane of the optical component;
FIGS. 6 and 7 illustrate membranes with a meta-optical element arranged on top of the membrane;
FIG. 8 illustrates an optical component that includes a meta-optical element formed within the membrane of the optical component;
FIG. 9 illustrates an optical component that includes a meta-optical surface modification of the upper surface of the carrier substrate;
FIGS. 10A to 10D illustrate a method of manufacturing a plurality of optical components as illustrated in FIG. 9;
FIG. 11 illustrates an optical component that includes a black silicon surface modification of the upper surface of the carrier substrate;
FIGS. 12A to 12D illustrate a method of manufacturing a plurality of optical components as illustrated in FIG. 11;
FIG. 13 illustrates an optical component that includes a meta-optical absorber;
FIGS. 14A to 14C illustrate a method of manufacturing a plurality of optical components as illustrated in FIG. 13;
FIG. 15 illustrates an optical component that includes a meta-optical absorber and a meta-optical element;
FIGS. 16A to 16C illustrate a method of manufacturing a plurality of optical components as illustrated in FIG. 16;
FIG. 17 illustrates another example of an optical component that includes a meta-optical absorber and a polymer lens;
FIGS. 18A to 18D illustrate a method of manufacturing a plurality of optical components as illustrated in FIG. 17;
FIG. 19 illustrates an optoelectronic optical that includes a polymer lens having a base layer and a stray light modifying element formed in the upper surface of the base layer;
FIG. 20 illustrates an enlarged view of a portion of the optical component in FIG. 19;
FIG. 21 and 22 illustrate further examples of an optical component that includes a polymer lens having a base layer and a stray light modifying element formed in the upper surface of the base layer;
FIG. 23 illustrates an example of an optoelectronic module comprising an optical component and an optoelectronic device;
FIG. 24 illustrates another example of an optoelectronic module comprising an optical component and an optoelectronic device;
FIG. 25 illustrates a device according to FIG. 24 in a top view; and
FIG. 26 illustrates yet another example of an optoelectronic module comprising an optical component and an optoelectronic device.

### DETAILED DESCRIPTION

### Definitions

Throughout the present specification and claims, the terms "in particular", "preferably," and "optionally" are to be understood to express that the corresponding subject-matter is optional. The expression "comprising a or b" is to be understood as including the situations "comprising only a," "comprising only b," and "comprising both a and b." In other words, this expression is to be understood to be synonymous with the expression "comprising at least one of a and b."

Use of any and all examples, or exemplary language (e.g., "such as") provided herein, is intended merely to better illuminate embodiments of disclosure, and does not pose a limitation on scope of disclosure unless otherwise claimed. No language in specification should be construed as indicating any non-claimed element as essential to practice of disclosure.

Directions can be as follows: the carrier substrate has an upper surface, on which the layer stack including the membrane is disposed. The surface of the carrier substrate that is located opposite to the upper surface is designated as the "lower" surface of the carrier substrate. The cavity in the carrier substrate has two ends. These ends are designated as the "upper" and "lower" ends. The "upper" end is the end that is spanned by the membrane, while the "lower" end is the end that is located away from the membrane. The membrane has an "upper" surface that faces away from the cavity and a "lower" surface that faces towards the cavity. Each layer of the layer stack, including the one or more layers of the membrane, extends essentially parallel to the upper surface of the carrier substrate, thereby defining a "lateral plane". A "lateral" direction is any direction that is essentially parallel to the lateral plane or has a grazing angle to the lateral plane of less than 30°. The direction perpendicular to the lateral plane is designated the "longitudinal", "axial", "vertical" or "height" direction. In some embodiments, the optical element defines an optical axis that extends along the longitudinal direction. These definitions are not intended to define absolute directions in space; they only serve to define relative orientations and locations within the devices that will subsequently be described in more detail.

A material is called "transparent" to light at a design wavelength or, more generally, in a wavelength range of interest if the linear attenuation coefficient of the material for the light is less than 10³ cm⁻¹, preferably less than 3 · 10² cm⁻¹. In other words, a material is called "transparent" if the light is attenuated by not more than approximately 10%, preferably not more than 3% during its passage through 1 µm of the material. Some transparent materials, such as silicon oxide and silicon nitride, may have much lower attenuation coefficients, e.g., less than 10¹ cm⁻¹ or even less than 10⁰ cm⁻¹, throughout the visible and near-infrared ranges. A membrane or membrane layer is designated as being "transparent" for light at a design wavelength or in a in a wavelength range of interest if attenuation of the light during the passage of the light through the membrane or membrane layer along the height direction is less than 10%, preferably less than 5%, more preferably less than 2%, even more preferably less than 1%.

A "layer stack" may consist of one single material layer or may comprise a plurality of material layers. The materials may include dielectric materials such as silicon oxide and silicon nitride, semiconductor materials such as poly-silicon and amorphous silicon, and metals such as Al, Cu and Au. At least one of the layers, in particular, the uppermost layer, may be a polymer layer, in particular, a transparent polymer layer.

The "design wavelength" is a characteristic wavelength of the electromagnetic phenomena that are intended to be influenced by the optical component. For example, if the optical component is intended to modify light emitted by a light source, the design wavelength is a characteristic emission wavelength of the light source. If the optical component is intended to modify light to be detected by a light detector, the design wavelength is a characteristic wavelength for which the light detector is sensitive.

A "metamaterial" is a material that has been provided with engineered electromagnetic properties by structuring the material on a length scale that is smaller than or comparable to the design wavelength. More specifically, a metamaterial may comprise an arrangement of repetitive structural elements, called "meta atoms", to provide the material with the engineered electromagnetic properties. A metamaterial derives its electromagnetic properties not primarily from the properties of the materials from which it is formed, but from its structure, in particular, from the structure imparted to it by the meta atoms, e.g., from the shape, geometry, size, orientation and/or arrangement of the meta atoms. The meta atoms may all have approximately the same shape and dimensions.

A "metasurface" or "meta-optical surface structure" is the two-dimensional analogon of a metamaterial. Like a metamaterial, a metasurface has engineered electromagnetic properties derived from its structure. A metasurface may comprise a plurality of meta atoms arranged in a two-dimensional array. A "moth-eye structure" is a meta-optical surface structure that exhibits a refractive gradient index along the height direction. Such structures may comprise elongated meta atoms that taper towards one end along the surface normal, such as (truncated) cones, hemispheres or nipples. Examples of meta-optical surface structures and their manufacture are disclosed in K. Askar et al., "Self-assembled self-cleaning broadband anti-reflection coatings", Colloids and Surfaces A: Physicochemical and Engineering Aspect, Vol. 439, pp. 84-100 (2013), https://doi.org/10.1016/j.colsurfa.2013.03.004.

The meta atoms of a metamaterial or metasurface may be solid ("positive") structures, which may be created, e.g., by etching away the surrounding material, or they may be "negative" structures in the form of void spaces, e.g., created by etching the void spaces into the surface.

A "meta-optical absorber", sometimes called a "meta-optical perfect absorber" or a "metamaterial perfect absorber", may comprise upper and lower metal layers separated by a dielectric layer. The upper metal layer is structured to form an array of meta atoms in the form of metallic resonators. The lower metal layer is a reflective layer and may be either continuous or structured. The layers are arranged in such a manner that at least some of the light entering the dielectric layer between the metal layers is effectively absorbed. Several possible mechanism for absorption have been discussed in the literature. One possible mechanism is localized plasmonic resonance at the meta atoms, leading to a phase shift at the meta atoms, followed by destructive interference from the reflectance at the lower metal layer. Additional information can be found in K. Bahattarai et al., "Metamaterial Perfect Absorber Analyzed by a Meta-cavity Model Consisting of Multilayer Metasurfaces", Scientific Reports 7, 10569 (2017), https://doi.org/10.1038/s41598-017-10520-w.

"Black silicon" is a modification of a silicon surface comprising an irregular or approximately regular (in particular, self-organized) array of structural elements, in particular, pillar-, needle- or cone-shaped elements or micro- or nanopores, to cause the silicon surface to have reduced reflectivity and increased absorption of light. The structural elements preferably have lateral dimensions below a design wavelength of the optical component, in particular, lateral dimensions below 1 µm. Several methods for creating black silicon are known, including reactive-ion etching (RIE), metal-assisted chemical etching (MACE), and irradiation with femtosecond laser pulses in vacuum or in the presence of a gas containing a dopant. An overview is provided in Z. Fan et al, "Recent Progress of Black Silicon: From Fabrications to Applications", Nanomaterials 2021, 11, 41, https://doi.org/10.3390/nano11010041 and in X. Liu et al., "Black silicon: fabrication methods, properties and solar energy applications", Energy Environ. Sci., 2014, 7, 3223-3263, https://doi.org/10.1039/C4EE01152J.

The term "silicon oxide" is to be understood to include silicon dioxide.

An optical element is considered a "focal element" if the optical element is capable of reducing the divergence of a bundle of light rays that impinges onto the optical element, for instance, by shaping a divergent bundle of rays into a collimated beam or into a convergent bundle of rays. A focal element does not necessarily need to define a single focal spot.

In some embodiments, an optical element may be a refractive optical element, a diffractive optical element, or a meta-optical element. A "refractive optical element" is an optical element that modifies light impinging on it by refraction. For example, a refractive optical element may comprise a conventional lens. A "diffractive optical element" (DOE) is an optical element that modifies light impinging on it by diffraction. In some embodiments, a DOE may comprise a plurality of structural elements having different heights, the heights varying on a length scale that is smaller than or comparable to a design wavelength of the light to be modified. A "meta-optical element "(MOE) is an optical element that comprises a metamaterial or a metasurface.

### Light leakage and stray light

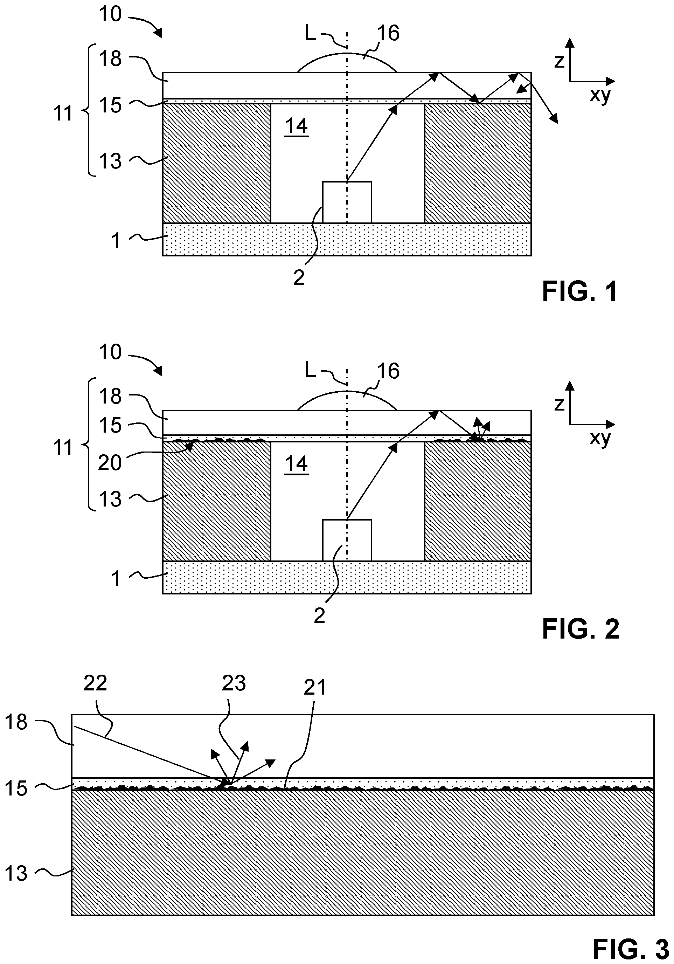

FIG. 1 illustrates, in a highly schematic manner, an optoelectronic module 10. The optoelectronic module 10 comprises a base substrate 1, on which an optoelectronic device in the form of a light source 2 is disposed. Also disposed on the base substrate 1 is an optical component 11. The optical component 11 comprises a carrier substrate 13. A thin transparent membrane 15 is disposed on a membrane-carrying upper surface of the carrier substrate 13. A cavity 14 is formed in the carrier substrate 13, the cavity extending from a lower surface of the carrier substrate 13 up to the membrane 15 such that a membrane-spanning portion of the membrane 15 spans the cavity 14. An optical element 16 in the form of a polymer imprint lens for shaping the light that is emitted from the light source 2 is disposed on top of the membrane 15. The optical element 16 comprises a polymer base layer 18, which is disposed directly on top of the membrane 15. The optical element 16 defines an optical axis L, which in the present example is parallel to a height direction z of the optical component 10. The optical component 11 may be manufactured separately from the base substrate 1 and the light source 2 and may be mounted to the base substrate 1 as a pre-assembled unit.

In operation, the light source 2 emits light towards the optical element 16 generally along the optical axis L. Some of the light may be reflected at an upper surface of the base layer 18 and may propagate essentially parallel to a lateral plane xy, experiencing multiple internal reflections at the upper and lower surfaces of the base layer and the membrane. When the light leaves the optical component 11 along a lateral direction, it may interfere with light-sensitive components outside the optical component 11.

### Stray light modifying element

FIG. 2 illustrates, in a highly schematic manner, an optoelectronic module 10 that has a similar setup as the optoelectronic module of FIG. 1. In order to reduce the amount of stray light that is able to exit the optical component 11 laterally, the optical component 11 of FIG. 2 includes a stray light modifying element 20 for modifying the stray light that is traveling laterally through the membrane 15 and the base layer 18. In the present example, the stray light modifying element 20 is an anti-lightguide surface structure that has been formed on the upper surface of the carrier substrate 13, more specifically, a roughening 21 of at least a portion of this surface in a region that surrounds the cavity 14.

The anti-lightguide surface structure substantially reduces specular reflections at the upper surface of the carrier substrate 13. This is illustrated in more detail in FIG. 3. Light rays 22 that impinge onto the anti-lightguide surface structure are diffusely scattered into a broad range of directions 23, including directions away from the lateral plane.

### Exemplary method of manufacture

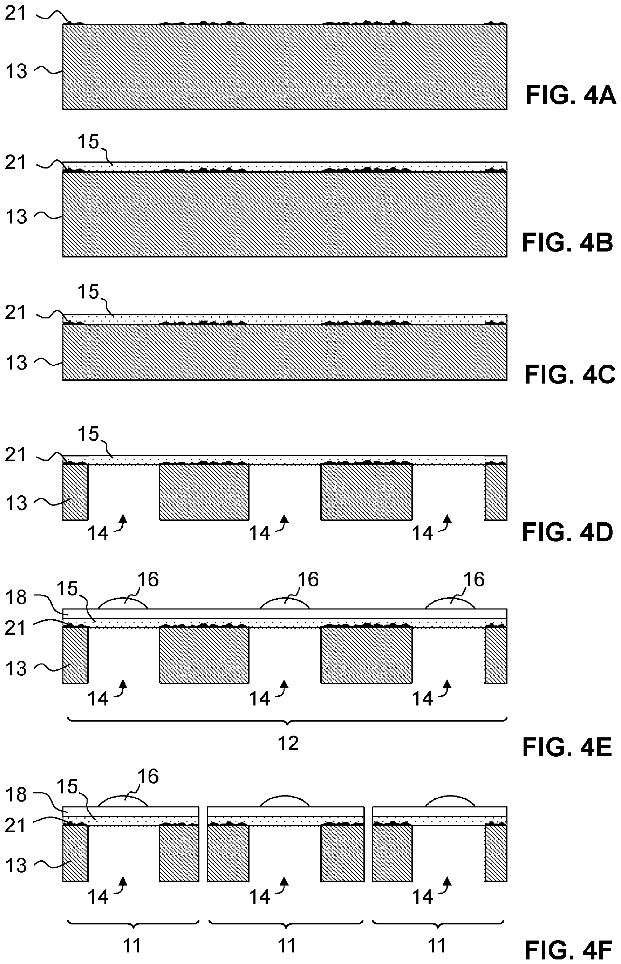

FIGS. 4A to 4F illustrate an exemplary method of manufacture of a plurality of optical components as illustrated in FIG. 2. Initially, a wafer comprising the carrier substrate 13 is provided (FIG. 4A). The wafer may, for instance, be a silicon wafer or a wafer comprising a compound semiconductor. The thickness of the wafer may be, e.g., in the range of 250 µm to 1000 µm. For example, a typical thickness for a silicon wafer is 725 µm. A portion of the upper surface of the wafer is then roughened by disposing a photolithographic mask onto the wafer which exposes only the areas to be roughened, and by wet etching the partially masked upper surface using KOH etching. This results in a wafer having a roughening 21 on a portion of its upper surface.

In a next step, a membrane 15 is deposited onto the partially roughened upper surface (FIG. 4B). While only one single layer is illustrated in FIG. 4B, the membrane 15 may have more than one layer. Each layer may be composed, e.g., of silicon oxide, silicon nitride, crystalline silicon, or amorphous silicon. Deposition of the membrane layers may be done by any suitable wafer-level process, such as chemical vapor deposition (CVD). One or more of the membrane layers may be structured before the next layer is deposited. In particular, if any metal layers are present within the membrane, these metal layers may be partially removed. Structuring of the layers may be done by any suitable wafer-level process, e.g., by a lithographic process.

Optionally, the wafer is subsequently ground at its bottom surface to reduce the thickness of the carrier substrate 13 (FIG. 4C).

The wafer is then etched from its lower surface to create an array of cavities 14 in the wafer (FIG. 4D). Etching of the cavities 14 may be achieved by any suitable etching method, including but not limited to deep reactive ion etching (DRIE) or potassium hydroxide (KOH) etching. The membrane 15 may act as an etch stop during etching. Each of the resulting cavities 14 extends from an open lower end all the way to the membrane 15, exposing a cavity-spanning portion of the membrane 15 at the upper end of the cavity 14. As a result, the upper end of the cavity 14 is spanned by the cavity-spanning portion of the membrane 15. In those regions where the cavities 14 are formed, the upper surface of the wafer has not been roughened. Thereby, the cavity-spanning portion of the membrane has a smooth lower surface. In contrast, in a region that surrounds each cavity, the upper surface of the wafer has been roughened.

An array of optical elements 16 is then formed on the membrane 15, whereby an optical element 16 is disposed on each of the cavity-spanning portions of the membrane 15 (FIG. 4E). In the present example, the optical elements 16 are refractive optical elements (ROEs) in the form of polymer imprint lenses formed by a polymer imprinting (e.g., embossing) process. To this end, a polymer is dispensed centrally on the membrane, and an imprint stamp (embossing die) is pushed towards the wafer to shape the optical elements. Typically, a flat polymer base layer 18 that covers essentially the entire upper surface of the wafer is formed in this process as well.

The resulting "monolithic optical spacer wafer" 12 with the optical elements thereon is then diced to obtain a plurality of singulated optical components 11 (FIG. 4F). Before dicing, the "monolithic optical spacer wafer" 12 may be bonded to a base substrate (e.g., a base wafer, a land grid array, or a printed circuit board) with optoelectronic devices on it, and the resulting composite structure may be diced afterwards.

FIGS. 4A to 4F are not to scale. Specifically, the thickness of the membrane 15 in relation to the thickness of the carrier substrate 13 is depicted thicker than it would typically be in reality. In reality, the thickness of the membrane is preferably not more than 10% of the thickness of the carrier substrate 13. After grinding, the carrier substrate typically has a thickness along the height direction z between 200 µm and 800 µm. The thickness of the membrane is preferably in the range of 1 to 20 µm. The thickness of the base layer 18 is typically less than 100 µm. The lateral dimensions of the resulting optical components 11 are typically larger than their thickness by at least a factor of 2. Typical lateral dimensions of the optical component 11 are 800 µm to 2000 µm. Typical lateral dimensions of the cavity are 300 µm to 800 µm.

The steps of the presently proposed method of manufacture do not necessarily have to be carried out in the above-described order. For instance, the step of grinding the carrier substrate may be left away or may be carried out after the cavities have been formed or even after the optical elements have been created. As another example, the optical elements may already be created before the cavities are etched. This may be advantageous in cases where the cavity-spanning portion of the membrane has insufficient stability to allow an imprinting operation to be carried out after creation of the cavities. If the grinding and/or etching is carried out only after creation of the optical element, a custom-made chuck may be employed for covering the upper surface of the wafer during these operations, the chuck having depressions for receiving the optical elements without damage. In particular, such a chuck allows turning the wafer upside down for the grinding operation without damaging the optical elements.

### Alternative types of optical elements

Instead of a polymer imprint lens, the optical element 16 may also be another type of optical element. For example, the optical element 16 may be a diffractive optical element (DOE) or a meta-optical element (MOE). An optical element is not required in all applications and may also be dispensed with.

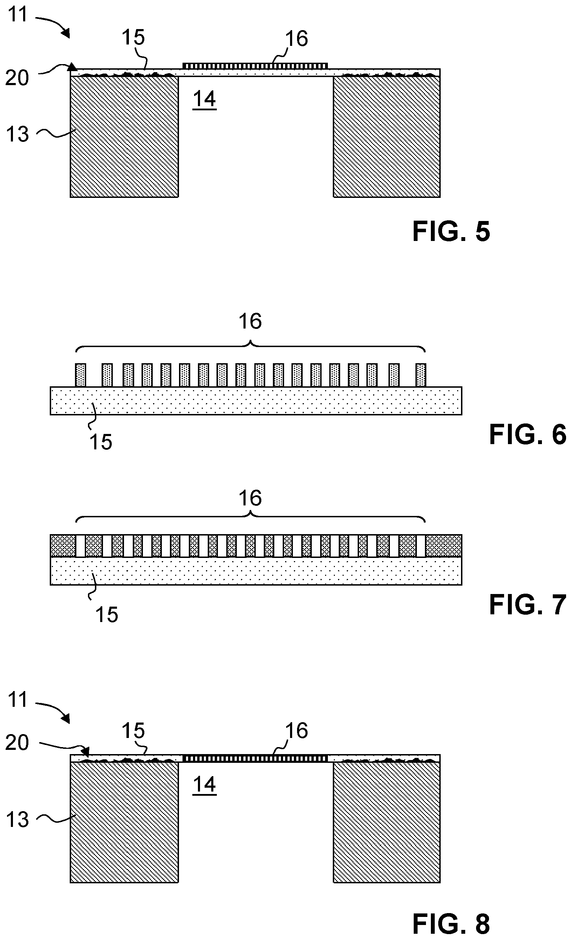

By the way of example, FIG. 5 illustrates an embodiment of an optical component 11 where the optical element 16 is a meta-optical element (MOE) disposed on the membrane 15. In this example, the optical element 16 extends only across the cavity-spanning portion of the membrane 15 and does not cover the membrane outside the cavity-spanning portion. A stray light modifying element 20 is provided to reduce the amount of stray light that is able to laterally propagate through the membrane 15.

FIG. 6 illustrates an example of a meta-optical element (MOE). In the present example, the meta-optical element 16 comprises a two-dimensional array of meta atoms in the form of pillars whose longitudinal axes extend perpendicular to the membrane. The pillars are arranged to manipulate the light passing through the MOE in a desired manner, e.g., to achieve a focusing effect. The length of the pillars may generally be, e.g., between 50% and 200% of the design wavelength, the diameters may be between 20% and 40% of the design wavelength, and the center-to-center distances may be between 40% and 200% of the design wavelength.

For producing the pillars, a continuous material layer may be disposed on the membrane, and the pillars may be created by etching away the material of the layer around the pillars.

In an alternative embodiment, the pillars may be "negative" pillars in the form of void spaces in the material layer. Such an embodiment is illustrated in FIG. 7. The pillars may be created by etching the void spaces into the material layer.

In the example of FIG. 8, a meta-optical element has been formed within the membrane 15, e.g., in at least one layer of a multi-layered membrane.

Also other types of optical elements may be used, including diffractive optical elements (DOEs). For instance, DOEs may be created on top of the membrane by nanoimprint lithography or greyscale lithography.

To further reduce stay light effects, parts of the membrane 15 outside the cavity-spanning portion (or at least the transparent layer(s) of the membrane in case of a multi-layer membrane) may be etched away in an additional wafer-level etching step, e.g., before dicing, such that the remaining portion of the membrane 15 or of its transparent layer(s) covers only part of the upper surface of the carrier substrate 13. As a result, the membrane 15 or at least its transparent layer(s) laterally do not extend all the way to the perimeter of the upper surface of the carrier substrate 13 of the optical component 11 after the wafer has been diced, leaving a strip between the perimeter of the membrane portion that remains on the carrier substrate 13 and the perimeter of the upper surface of the carrier substrate 13 that is free of transparent membrane material. The strip preferably extends without interruption along the perimeter of the remaining membrane portion and preferably has a width of at least 100 µm.

### Meta-optical surface structure on carrier substrate

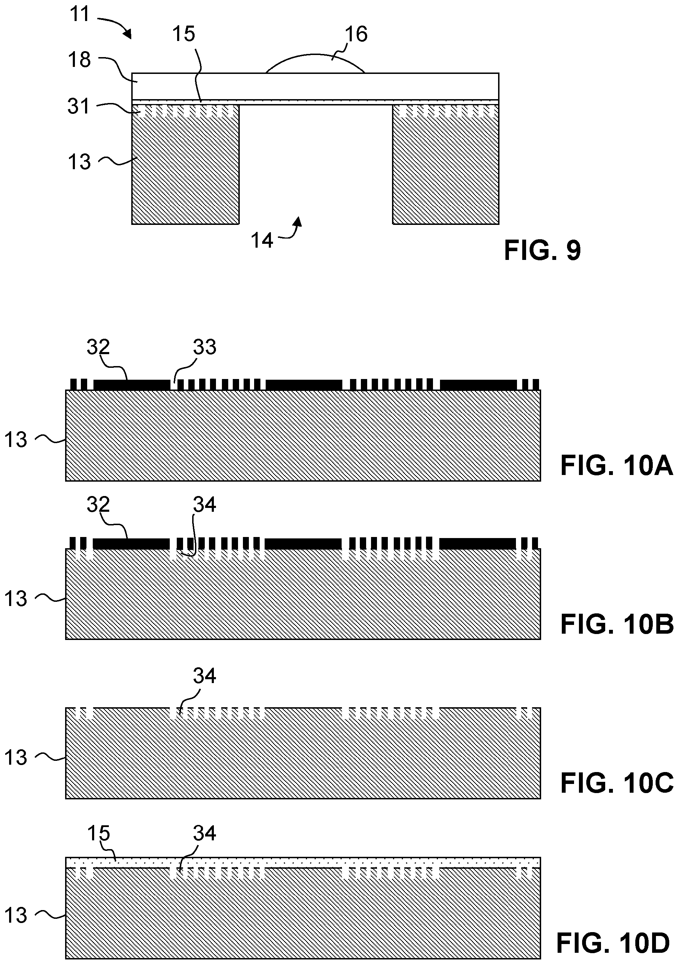

FIG. 9 illustrates an optical component that includes a stray light modifying element in the form of a meta-optical surface structure 31 formed in the upper surface of the carrier substrate, transforming the upper surface into a metasurface. For example, the I meta-optical surface structure may be a moth-eye structure that exhibits a refractive index gradient between the membrane and the carrier substrate, thereby acting to guide the stray light away from the lateral plane into the carrier substrate, where it can be absorbed. For example, for light at a wavelength of 940 nm, the light is absorbed to an intensity of 1/*e*² within a thickness of 100 µm of a Si substrate. The meta-optical surface structure may comprise elongated meta atoms that taper away from the carrier substrate, e.g., in the form of (truncated) cones, hemispheres, nipples, etc.

An exemplary process flow for creating an optoelectronic component comprising a meta-optical surface structure formed in the upper surface of the carrier substrate next to the cavity spanning portion of the membrane is depicted in FIGS 10A to 10D. A photo resist 32 is applied to the upper surface of the wafer that forms the carrier substrate 13. The photo resist 32 is structured, defining a structured mask 33 in those regions of the upper surface that will later surround the cavities 14 while protecting those portions onto which later the cavity-spanning portions of the membrane will be disposed (FIG. 10A). In a subsequent etching step, meta-atoms in the form of truncated cones 34 are formed in the carrier substrate 13 by etching through the mask 33 (FIG. 10B). For simplicity, the meta atoms are illustrated as cylindrical pillars in Figs. 10B to 10D. However, as a result of the etching process, more material will generally be removed at the upper end of each meta atom than at its lower end, and the meta-atoms will therefore generally taper away from the carrier substrate 13 to create the desired refractive index gradient. After removing the remaining photo resist (Fig. 10C), the membrane 15 is applied (Fig. 10D). All other steps can be carried out as described above in connection with Figs. 4A to 4F.

Instead of forming the meta-optical surface structure in the upper surface of the carrier substrate, it is also possible to form the meta-optical surface structure in a separate material layer that has been disposed onto the upper surface of the carrier substrate.

Creation of a meta-optical surface structure is not limited to the above-described etching method, and any method that is compatible with a wafer-level process may be employed.

### Black silicon surface modification

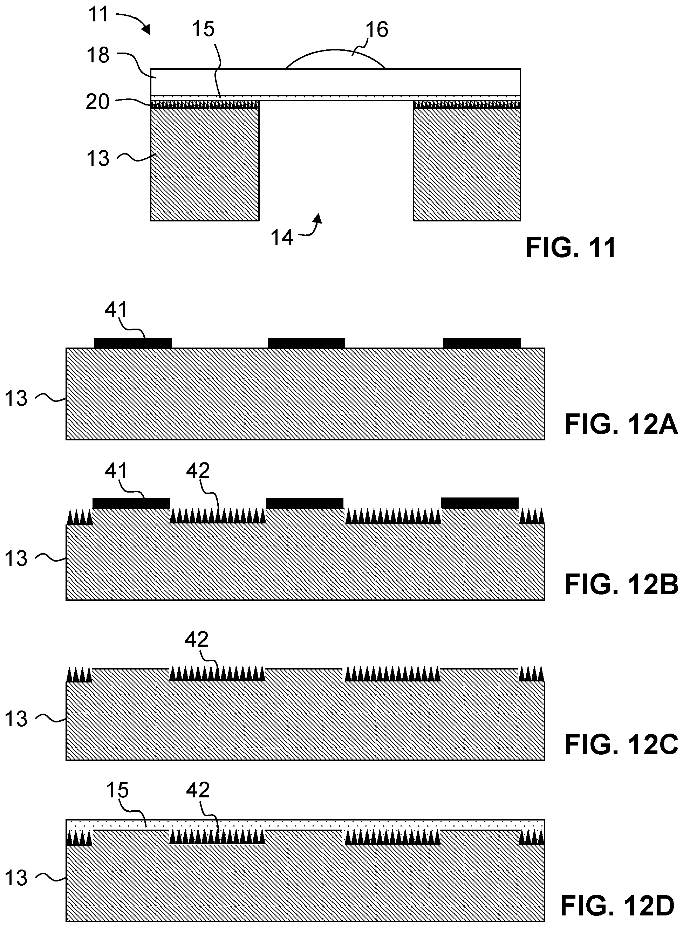

FIG. 11 illustrates an optical component that includes a stray light modifying element 20 in the form of a black silicon modification of the upper surface of the carrier substrate. The black silicon modification causes the surface to have reduced reflectivity and increased absorption of light.

An exemplary process flow for creating an optoelectronic component comprising a black silicon modification is depicted in FIGS 12A to 12D. A photo resist 41 is applied to the upper surface of the wafer that forms the carrier substrate 13 and structured to expose those regions of the upper surface that will later surround the cavities 14 while protecting those portions onto which later the cavity-spanning portions of the membrane will be disposed (FIG. 12A). Subsequently, the black silicon modification 42 is created in the exposed regions by etching, e.g., by RIE or another known etching process (FIG. 12B). After removing the remaining photo resist (Fig. 12C), the membrane 15 is applied (Fig. 12D). All other steps can be carried out as described above in connection with Figs. 4A to 4F.

### Meta-optical absorber

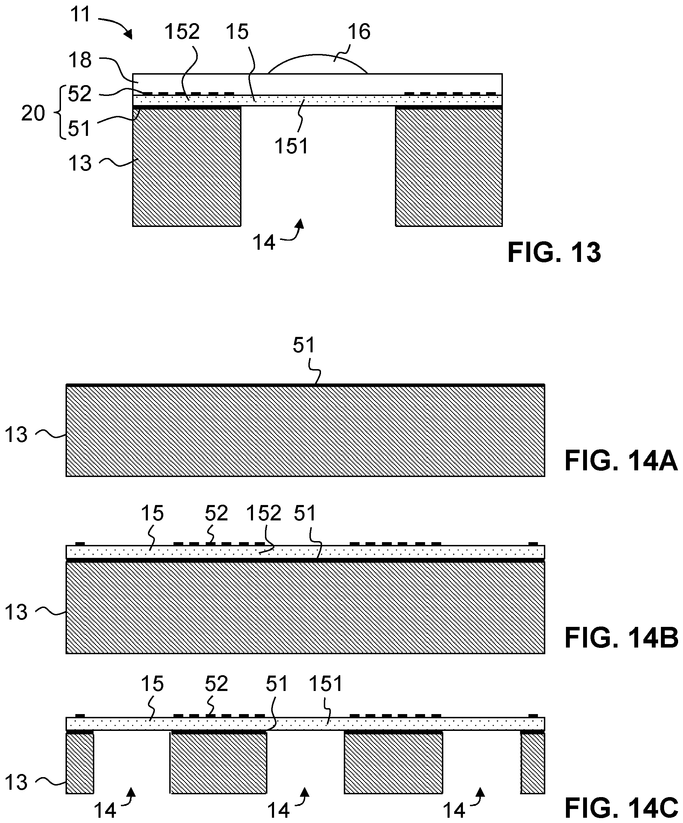

FIG. 13 illustrates an optical component that includes a stray light modifying element 20 in the form of a meta-optical absorber in the region around the cavity-spanning portion 151 of the membrane 15. The meta-optical absorber comprises a continuous lower metal layer 51 made e.g. of Al or Au below the lower surface of a dielectric layer 152 formed by a portion of the membrane 15 and an upper metal layer 52 made of the same or a different metal on top of the upper surface of the dielectric layer 152. The dielectric layer 152 is thus sandwiched between the two metal layers 51, 52. The thickness of each metal layer is typically well below the design wavelength and is preferably not more than 200 nm.

The upper metal layer is structured to create a meta-optical surface structure on the upper surface of the dielectric layer 152. Together, the two metal layers cause absorption of the stray light that impinges onto the upper surface of the dielectric layer 152 at small grazing angles relative to the lateral plane.

In some embodiments, the meta atoms may be shaped like crosses, but other shapes are also possible. Examples include, but are not limited to, circles, ellipses, annuli, squares, rectangles, stars etc. Typically, symmetrical meta-atom shapes work particularly well for unpolarized light, while unsymmetric shapes tend to work better with polarized light, the light's polarization direction being aligned with the characteristic axis of the meta-atom shape.

An exemplary process flow for creating an optical component comprising a meta-optical absorber is depicted in FIGS 14A to 14C. The lower metal layer 51 is applied to the upper surface of the wafer that forms the carrier substrate 13 (FIG. 14A). The membrane 15 is then applied, and the upper metal layer 52 is disposed on top of the membrane portion that is to form the dielectric layer 152 and structured using photolithographic methods (FIG. 14B). When the cavities 14 are created by etching (FIG. 14C), the lower metal layer 51 may be used as an etch stop layer and may subsequently be removed using a different etching process to expose the cavity-spanning portion 151 of the membrane 15. In this manner, the surface quality of the lower surface of the cavity-spanning portion 151 of the membrane can be improved. All other steps can be carried out as described above in connection with Figs. 4A to 4F.

### Combination of meta-optical absorber with meta-optical element

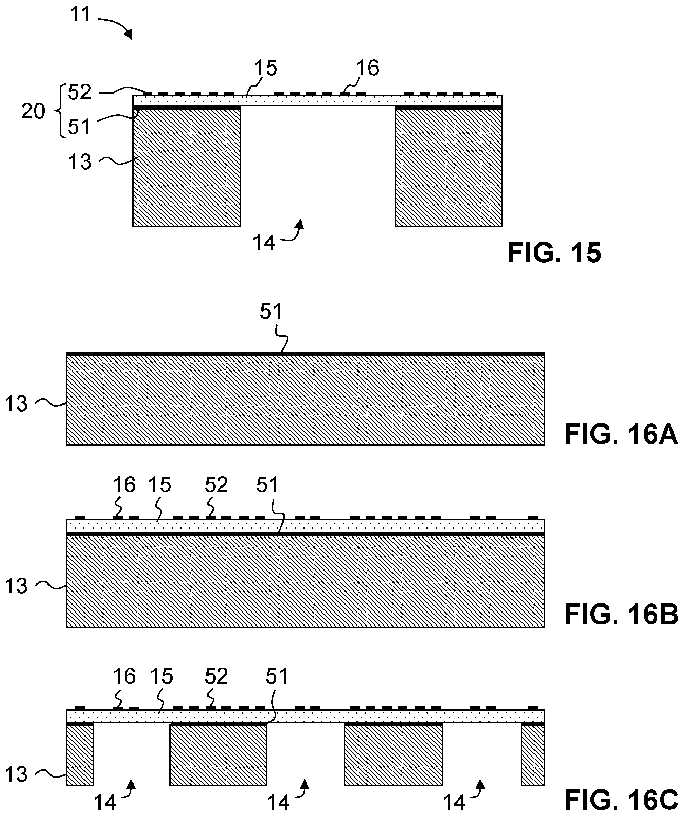

As illustrated in FIG. 15, the optical component 11 may not only comprise a stray light modifying element 20 in the form of a meta-optical absorber, but also a meta-optical element 16 (e.g., a polarizer) for manipulating the light that passes through the cavity-spanning portion of the membrane along the vertical direction z. The meta-optical element 16 may be formed by the very same upper metal layer 52 from which also the meta-optical absorber is formed. This embodiment is advantageous in that the optical element 16 can be produced together with the stray light modifying element 20 without requiring any additional production steps.

FIGS. 16A to 16C illustrate a workflow for creating such an optical component. The illustrated steps are the same ones as in FIGS. 14A to 14C, the only difference being that the upper metal layer 52 is structured not only to create the meta-optical surface structure of the meta-optical absorber, but also the meta-optical element 16.

### Meta-optical absorber with reduced thickness

In the above-described embodiment of a meta-optical absorber, the dielectric layer 152 in between the metal layers of the perfect absorber is part of the membrane 15. This makes processing very easy. However, the membrane typically has a thickness of 1 µm to 20 µm. For this range of thicknesses, undesired Fabry-Perot-like interference may occur between the two metal layers, which may cause the meta-optical absorber to be sensitive to the incident angle of the light rays impinging onto it.

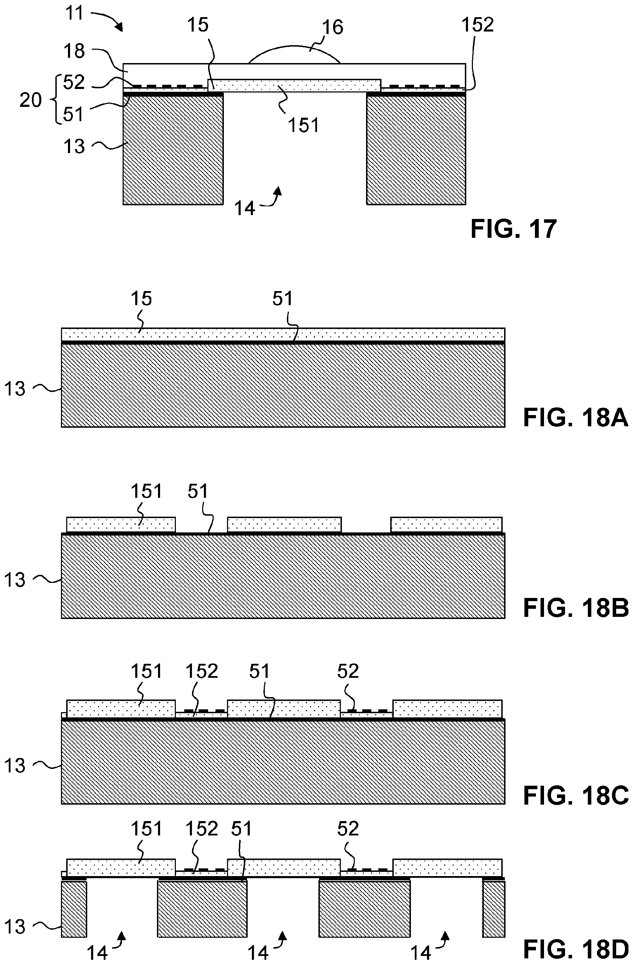

FIG. 17 illustrates an embodiment that may exhibit reduced sensitivity to the incident angle. In this embodiment, the membrane 15 has been removed in a region that surrounds the cavity-spanning portion 151, and a separate dielectric layer 152 has been provided, the separate dielectric layer having reduced thickness. The reduced thickness can be as low as 50 nm. In this manner, undesired Fabry-Perot-like interference is avoided.

FIGS. 18A to 18D illustrate a workflow for creating such an optical component. Initially, the lower metal layer 51 is deposited on the wafer that forms the carrier substrate 13, and the membrane is formed on top of the metal layer (FIG. 18A). Afterwards, the membrane material in a region outside the cavity-spanning portion 151 of the membrane is fully removed, leaving however a sufficiently large area around the cavity-spanning portion such that the cavity-spanning portion remains safely anchored on the carrier substrate (FIG. 18B). Subsequently, a thin dielectric layer 152 is applied, having a thickness of e.g. only 50 nm, and the structured upper metal layer 52 is created on top (FIG. 18C). FIG 18D illustrates the situation after etching the cavities 14. The remaining steps are the same as described above in connection with FIGS. 4A to 4F.

### Anti-lightguide surface structure in base layer of optical element

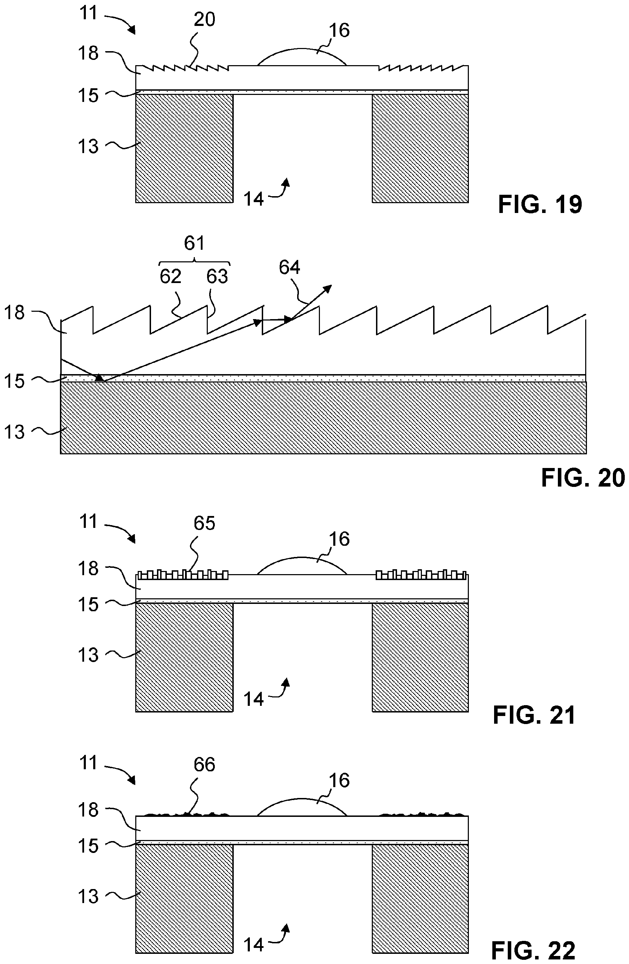

FIG. 19 illustrates an optical component that includes a stray light modifying element 20 in the form of an anti-lightguide surface structure that has been created in the upper surface of the base layer 18 of the optical element 16 by imprinting.

As illustrated in FIG. 20, the anti-lightguide surface structure comprises a plurality of step-like structures 61, each such structure being sawtooth-shaped, having a slightly sloped oblique face 62 (having an angle in the range of, e.g., 5° to 30° relative to the lateral plane) and an essentially vertical face 63 (having an angle of, e.g., 75° to 90° relative to the lateral plane). The essentially vertical face 63 is oriented to the lateral plane at a sufficiently large angle to allow stray light that is travelling essentially parallel to the lateral plane to escape from the base layer 18 after the stray light has been reflected at the interface between the base layer 18 and the membrane 15 or at the interface between the membrane 15 and the carrier substrate 13 at a comparatively small angle relative to the lateral plane. For example, light ray 64 is first reflected at the substrate 13, then hits the essentially vertical face 63, where it escapes from the base layer 18 before being externally reflected at the oblique face 62 of the next sawtooth. Each step-like structure 61 may be ring-shaped in the lateral plane.

The multi-step structure can be created by providing its inverse in the imprint stamp used for creating the optical element 16.

In the alternative or in addition, the anti-lightguide surface structure may comprise a diffractive diffuser structure 65 configured to diffuse the stray light into a plurality of different directions outside the base layer by diffraction, as illustrated in FIG. 21. The diffractive diffuser structure can be created by providing its inverse in the imprint stamp used for creating the optical element 16.

Instead of a diffractive diffuser structure, a roughening 66 may be provided, as illustrated in FIG. 22. The roughening can be created by providing a rough surface in the imprint stamp used for creating the optical element 16.

### Examples of optoelectronic modules

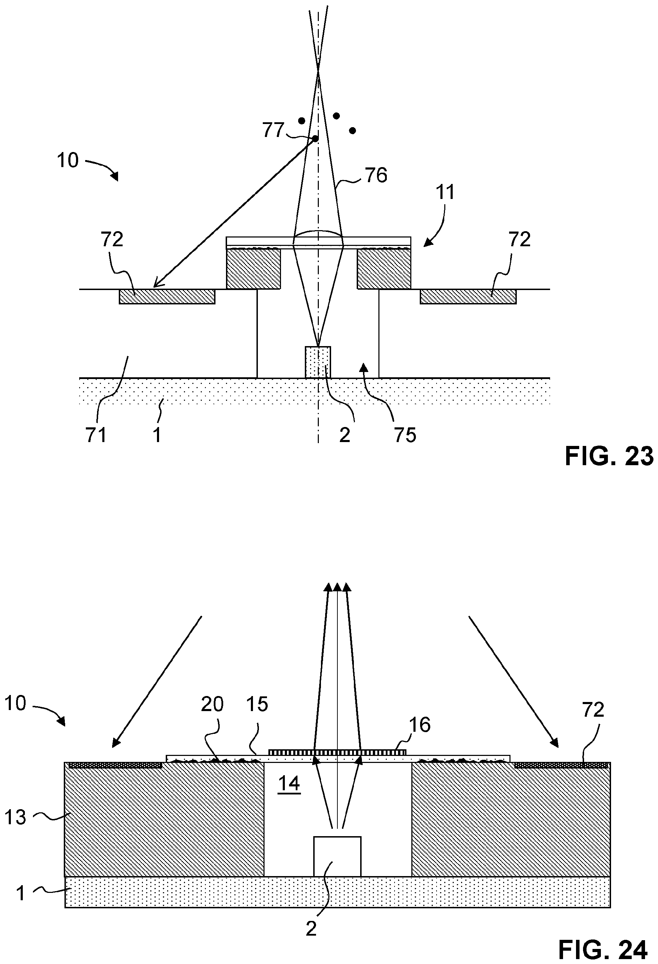

FIG. 23 illustrates, in a highly schematic manner, an example of a complete optoelectronic module 10 that includes an optical component 11 according to an embodiment of the present technology. The optoelectronic module 10 comprises a base substrate 1, e.g., in the form of a printed circuit board (PCB) or a land grid array (LGA). An optoelectronic device in the form of a light source 2 for emitting light is disposed on the base substrate 1. A detector chip 71 is also provided on the base substrate 1. The detector chip 71 has a detector chip cavity 75. At least one light detector 72 is integrated into an upper surface of the detector chip 71. An optical component 11 comprising a carrier substrate, cavity, membrane, optical element, and stray light modifying element, as described above, is arranged on the upper surface of the detector chip 71 in such a manner that the cavity 14 of the optical component 11 is aligned with the detector chip cavity 75. The detector chip 71 is arranged relative to the light source 2 in such a manner that light emitted from the light source 2 is able to reach the optical element of the optical component 11 through the detector chip cavity 75 and the cavity of the optical component 11.

The optoelectronic module may be operated, e.g., as a particulate matter (PM) sensor. In operation, the light source 2 emits a light beam 76. The optical component 11 shapes the light beam 76 to define a detection volume for particulate matter outside the optoelectronic module 10. When a PM particle 77 traverses the detection volume, light is scattered by the particle and is detected by the light detector 72. Similarly, the optoelectronic module may be operated as a photoplethysmogram (PPG) sensor.

FIG. 24 illustrates, in a highly schematic manner, another example of an optoelectronic module 10 that includes an optical component 11 according to an embodiment of the present technology. In this embodiment, at least one light detector 72 is directly integrated within the upper surface of the carrier substrate 13. In order to protect the light detector 72 from stray light, the stray light modifying element 20 is arranged between the cavity-spanning portion of the membrane 15 and the light detector 72 when viewed in a projection onto the lateral plane.

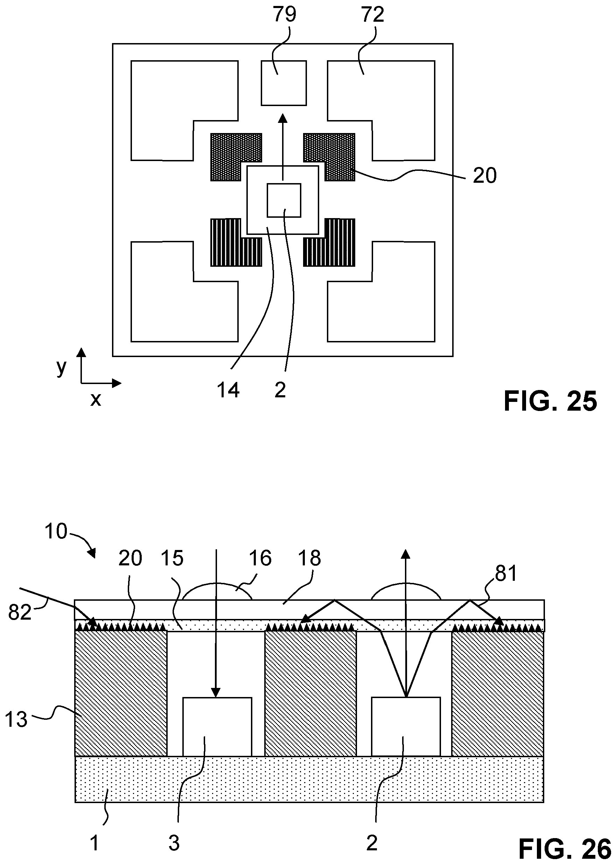

As illustrated in FIG. 25, the stray light modifying element 20 does not necessarily need to fully surround the cavity-spanning portion of the membrane 15. For example, it may be desirable to detect the level of stray light using a stray light detector 79. Accordingly, the stray light modifying element 20 may be interrupted to allow stray light to propagate along one or more selected lateral directions.

FIG. 26 illustrates, in a highly schematic manner, yet another example of an optoelectronic module 10. The setup of this optoelectronic module is somewhat similar to the module of FIG. 2. However, two optoelectronic devices in the form of a light source 2 and a light detector 3 are disposed on the base substrate 1, an accordingly the carrier substrate 13 has two cavities, one each for the light source 2 and the light detector 3. In order to reduce the amount of stray light that is able to reach the light detector 3 from the light source 2 (exemplary stray light rays 81) or from the environment (exemplary stray light ray 82), a stray light modifying element 20 is provided between the two cavities and at least around the cavity that houses the light detector 3. The optoelectronic module may be employed, e.g., in a time-of-flight or pulse oximeter or in a particulate matter detector.

### General considerations

In the following, some general considerations concerning the optoelectronic component, the membrane, the substrate and the optical element will be discussed. These considerations generally apply to all of the above-discussed embodiments.

### General considerations concerning the optoelectronic component

In all above embodiments, the light source 2 may be, e.g., a light-emitting diode (LED) or a laser, more specifically, an infrared LED, an organic LED, an infrared laser, or a vertical cavity surface emitting laser (VCSEL). The light detector may be, e.g., a photodiode, a CCD image sensor, or a CMOS image sensor. Many other types of light sources and light detectors may be employed.

If a monochromatic light source (e.g., a laser, in particular, a VECSEL) is disposed in the cavity, the design wavelength of the optical element and/or of the stray light modifying element may be the fundamental wavelength of the light source. If a light detector is disposed in the cavity, the design wavelength may be the wavelength at which the detector has its greatest sensitivity.

### General considerations concerning the membrane

The cavity-spanning portion of the membrane is preferably transparent to light having a design wavelength or, more generally, to light in a wavelength range of interest. The wavelength range of interest may be a portion of the ultra violet (UV), visible (VIS), near-infrared (NIR) or mid-infrared (mid-IR) range of the electromagnetic spectrum, e.g., a portion of the wavelength range between about 200 nm and about 10 µm. In some embodiments, the wavelength range of interest is a portion of the UV wavelength range between about 200 nm and about 300 nm, the NIR wavelength range between about 800 nm and about 1'000 nm, or the mid-IR wavelength range between about 3 µm and about 5 µm.

In some embodiments, the membrane, or at least the cavity-spanning portion thereof, may have a thickness of 1 to 20 µm. In some embodiments, the carrier substrate may have a carrier substrate thickness that is constant or has a maximum, the cavity-spanning portion of the membrane may have a thickness that is constant or has a maximum, and the constant or maximum thickness of the cavity-spanning portion is at most 10%, preferably at most 5%, even more preferably at most 2%, possibly even at most 1% of the constant or maximum thickness of the carrier substrate. In absolute numbers, the cavity-spanning portion of the membrane may have a thickness that is at most 20 micrometers, preferably at most 10 micrometers, more preferably at most 5 micrometers.

The membrane may consist of a single layer of a transparent membrane material, or it may comprise two or more layers of identical or different membrane materials, at least one of these layers being made of a transparent material. The membrane may comprise at least one layer of a membrane material selected from silicon oxide, silicon nitride, crystalline silicon, and/or amorphous silicon. The membrane should be transparent to light at the design wavelength.

In some embodiments, the at least one transparent membrane layer covers only part of the upper surface of the carrier substrate such that the at least one transparent membrane layer laterally does not extend all the way to the perimeter of the upper surface of the carrier substrate, leaving a strip, band, patch, or line on the upper surface along the perimeter of the at least one transparent membrane layer that is free of any transparent membrane material. The strip preferably has a width of at least 100 micrometers. In this way, leakage of stray light into and out of the optical component is further reduced. The strip that is free of transparent membrane material preferably extends without interruption along the entire perimeter of the at least one transparent membrane layer.

In some embodiments, the optical component comprises an opaque layer, e.g., a metal layer, that laterally covers a perimeter of the at least one transparent membrane layer to prevent light from entering or exiting the membrane at its perimeter.

The surface quality of the membrane can determine how well light can enter and leave the membrane. The upper surface of the membrane, which faces away from the cavity, is normally not critical, since wafer deposition of the membrane materials (e.g., SiO by PECVD) typically results in very high surface quality. However, the bottom surface of the membrane, which faces the cavity, has a surface determined by the etching process with which the cavity has been created. The resulting surface quality may be difficult to control. For increasing the quality of the bottom membrane surface, an etch stop layer (e.g., a metal layer) may be deposited on the upper surface of the carrier substrate before the layers that are to form the cavity-spanning portion of the membrane are deposited on top of the etch stop layer. The etching process may then be carried out as follows: In a first step, the carrier substrate is etched only up to the etch stop layer. In the second step, the etch stop layer is then selectively etched away to expose the cavity-spanning portion of the membrane. In the second step, a much more controlled etching process may be employed than in the first step (e.g., wet etching in the second step vs. DRIE in the first step). Accordingly, a better surface quality of the bottom membrane surface may result.

### General considerations as to sequence of layers

In case of a multi-layer membrane, it is preferred that the layer sequence of the cavity-spanning portion of the membrane is chosen in such a manner that the index of refraction monotonically increases along the direction of travel of the light in order to minimize reflection at the membrane (so-called "index matching"). For instance, if a silicon nitride layer (index of refraction ≈ 2.01 at 940 nm) and a silicon oxide layer (index of refraction ≈ 1.45 at 940 nm) are present, it is preferred that the silicon nitride layer is applied on the lower surface of the membrane if the optical component is to be used together with a light source in the cavity, or on the upper surface of the membrane if the optical component is to be used together with a light detector in the cavity.

In addition or in the alternative, the layer sequence of the cavity-spanning portion of the membrane and the thickness of the individual layers may be chosen in such a manner that the cavity-spanning portion of the membrane minimizes reflectance by interference.

In a simple embodiment, the cavity-spanning portion of the membrane may comprise two layers having different indices of refraction. For minimizing reflectance by interference, it is then again preferred that the layer having the lower index of refraction is applied on the lower surface of the layer having the higher index if the optical component is to be used together with a light source in the cavity, or on the upper surface if the optical component is to be used together with a light detector in the cavity, as explained above in connection with "index matching". For minimizing reflectance by interference, the layer having the lower index of refraction may have a thickness that corresponds to approximately one quarter of a design wavelength for which optimum transmission is desired. For example, if the design wavelength is 940 nm, it is preferred that the thickness of the layer having the lower index of refraction is approximately 235 nm ("approximately" meaning, e.g., ± 10%). For example, the thickness may be in a range of 210 to 260 nm. Ideally, the lower index of refraction is approximately the square root of the higher index of refraction. Silicon nitride and silicon oxide layer are preferred materials for the layers because at a design wavelength of 940 nm the index of refraction of silicon oxide is approximately the square root of the index of refraction of silicon nitride. However, other materials may be employed.

In more complex embodiments, the cavity-spanning portion of the membrane may comprise more than two layers. In such cases, the sequence and thickness of the layers may be tailored to achieve additional desired design goals, e.g., near-zero reflectance at multiple wavelengths, across a band of wavelengths and/or over an extended range of incident angles.

If no external optical element is disposed on the upper surface of the membrane, the cavity-spanning portion of the membrane may additionally be provided with an anti-reflective coating. The anti-reflective coating may be a meta-optical surface structure, e.g., a moth-eye structure, similarly to the above-described meta-optical surface structures used as stray light modifying elements.

### General considerations concerning the carrier substrate

The carrier substrate can be preferably made of a monocrystalline semiconductor material.

In some embodiments, the carrier substrate is made of an elemental semiconductor material, in particular, a Group IV elemental semiconductor material like silicon. In some embodiments, the carrier substrate is made of a compound semiconductor material, in particular, a III-V compound semiconductor material like gallium antimonide (GaSb), indium antimonide (InSb), or indium arsenide (InAs). The semiconductor material may comprise impurities to increase attenuation of light in the semiconductor material. The semiconductor material preferably can have a linear attenuation coefficient of at least 10² cm⁻¹ for the wavelength range of interest, more preferably at least 2 · 10² cm⁻¹. In some embodiments, the linear attenuation coefficient may be at least 3 · 10² cm⁻¹, at least 5 · 10² cm⁻¹ or even at least 10³ cm⁻¹. In other words, the semiconductor material may be somewhat transparent to the light on short distances of travel of the light, but only to a degree that causes most of the light to be attenuated over a distance that is in the typical range of the lateral width of the lateral perimeter wall of the cavity.

The carrier substrate forms a lateral perimeter wall that laterally delimits the cavity. This lateral perimeter wall has a certain lateral width as measured in the plane in which the membrane extends. In some embodiments, the lateral width amounts to 1'000 micrometers or less, preferably 500 micrometers or less anywhere along the perimeter of the carrier substrate. Greater widths may render the optical component bulky and/or expensive. On the other hand, it can advantageous if the lateral width is not too small. In embodiments, the lateral width is at least 100 micrometers, e.g., preferably at least 200 micrometers. Smaller widths may lead to mechanical stability issues and, depending on the material of the carrier substrate and the wavelength range to be transmitted by the optical element, to light leakage issues through the substrate.

### Silicon-on-insulator substrate

Manufacture of the optical component may be simplified and may be made more cost-efficient by employing a silicon-on-insulator (SOI) wafer. An SOI wafer comprises a carrier substrate) composed of silicon, an insulating layer (e.g., silicon oxide or silicon nitride) on top of the carrier substrate, and a thin silicon layer on top of the insulating layer. Such wafers are commercially available.

The membrane may then comprise the silicon layer, and the insulating layer may be used as an etch stop layer when the cavities are created. While silicon absorbs light in most wavelength ranges of interest, attenuation of the light may be kept in a tolerable range by employing a sufficiently thin membrane. For instance, at a wavelength of 940 nm, pure silicon has an attenuation coefficient of 183 cm⁻¹, and attenuation of light through a silicon membrane having a thickness of 1-2 µm is in the range of 1.8%-3.5%, which may still be tolerable in many applications. An added advantage of silicon as a membrane material is that light is unable to travel through the membrane laterally, as it gets quickly absorbed in the membrane material.

Since silicon has a rather high index of refraction, the insulating layer may form part of the cavity-spanning portion of the membrane, acting as an anti-reflective coating in applications where a light source is to be disposed in the cavity. In other applications, the insulating layer may be used as an initial etch stop and may subsequently be etched away using a selective etching process to obtain a silicon membrane with very high surface quality on the bottom surface that faces the cavity.

### General considerations concerning the optical element

In some embodiments, the optical component comprises an external optical element that is disposed on a surface of the cavity-spanning portion of the membrane that faces away from the cavity and/or on a surface of the cavity-spanning portion of the membrane that faces towards the cavity. Instead, or in addition, the optical component may comprise an internal optical element formed within the cavity-spanning portion of the membrane, and/or a surface structure formed in one of the surfaces of the cavity-spanning portion of the membrane.

If the optical component comprises an external optical element that is disposed on the upper surface of the cavity-spanning portion of the membrane, the external optical element may comprise a base layer, e.g., a polymer base layer. It may then be advantageous that the base layer only partially laterally extends across the carrier substrate, leaving a strip, band, patch, or line on a surface of the carrier substrate along the perimeter of the polymer base layer that lacks any transparent polymer material. In this manner, undesired entry and exit of stray light at the perimeter of the carrier substrate is avoided. The strip preferably has a width of at least 100 micrometers. In addition, the optical component may comprise an opaque layer that laterally covers a perimeter of the polymer base layer to prevent light from entering or exiting the polymer base layer at its perimeter.

In some embodiments, the optical element may comprise a focal element configured to concentrate light that impinges on the optical element, a diffusor configured to diffuse light that impinges on the optical element, a dielectric filter configured to selectively transmit or reject light in at least one predetermined wavelength range, and/or an opaque baffle having an opening that defines an aperture for the light that enters or exits the cavity through the cavity-spanning portion of the membrane. If the optical element comprises a focal element, the focal element may be a refractive optical element (ROE), a diffractive optical element (DOE), or a meta-optical element (MOE).

### General considerations concerning meta-optical surface structures

As explained above, the design wavelength of the optical component may be selected from a wide range between the UV region (e.g., above about 200 nm wavelength) through the VIS and NIR regions up to the mid-IR region (e.g., up to about 10 µm wavelength) of the electromagnetic spectrum. The design wavelength may have implications for the design of the stray light modifying element. This is particularly true in the cases where the stray light modifying element comprises a meta-optical surface structure. In the following, some considerations in this respect will be discussed.

As a general rule, it is preferred that the meta atoms of a stray light modifying element comprising a meta-optical surface structure have lateral dimensions that are smaller than the design wavelength, in particular, not more than 80% of the design wavelength, in particular, about 15% to about 50% of the design wavelength. Also their periodicity (center-to-center distance) is preferably smaller than the design wavelength. If the meta atoms are elongated along the height direction z (e.g., cone-, nipple- or rod-shaped meta atoms), their length along the surface normal is preferably at least about 50% of the design wavelength, in particular, 50% to 300% of the design wavelength.

Some numerical examples:
- For a design wavelength between 250 nm and 300 nm, the lateral dimensions of the meta atoms are preferably about 40 nm to about 150 nm. Their periodicity is preferably not more than about 300 nm. Their length along the surface normal is preferably about 125 nm to about 900 nm.
- For a design wavelength between 800 nm and 1'000 nm, the lateral dimensions of the meta atoms are preferably about 120 nm to about 500 nm. Their periodicity is preferably not more than about 1'000 nm. Their length along the surface normal is preferably about 400 nm to about 3 µm.
- In the mid-IR region, the relative lateral and longitudinal dimensions of the meta atoms, expressed relative to the design wavelength, may be somewhat smaller than in the UV to NIR regions. For example, for a design wavelength between 3 µm and 5 µm, the lateral dimensions of the meta atoms are preferably about 320 nm to about 1.6 µm. Their periodicity is preferably not more than 3 µm. Their length along the surface normal is preferably about 1.1 µm to about 4.5 µm.

The exact dimensions and periodicities may also depend on the refractive indices of the materials from which the meta-optical surface structure is formed.

### General considerations concerning meta-optical absorber

If the stray light modifying element is a meta-optical absorber, the upper and lower metal layers may be comprised, e.g., of Au, Cu or Al, Al being preferred in UV applications. In some examples, the dielectric layer has a thickness that is not more than one quarter of the design wavelength. In some examples, the resonators or meta atoms of the structured metal layer have lateral dimensions of not more than the design wavelength, in particular, about 25% to 75% of the design wavelength, and an center-to-center spacing of not more than 150% of the design wavelength.

### Stacking

Two or more of the optical components may be stacked, such that the cavities of these optical elements are mutually aligned along the height direction. In other words, an optical assembly may be formed, comprising a first optical component and a second optical component, each optical components being configured as described above, wherein the first and second optical components are stacked in such a manner that the cavities of the first and second optical components are mutually aligned.

The optical elements of the first and second optical components may be identical or different. The carrier substrates of the optical components may have the same thickness or different thicknesses.

## Claims

1. An optical component (11) comprising:
a carrier substrate (13);
a cavity (14) formed in the carrier substrate, the cavity having a lower end and an upper end;
a layer stack comprising one or more material layers arranged on an upper surface of the carrier substrate (13), each of the material layers extending in a lateral plane (xy) and having a lower surface facing the carrier substrate (13) and an upper surface facing away from the carrier substrate (13), at least one of the material layers forming a membrane (15) having a cavity-spanning portion that spans the cavity at its upper end; and
a stray light modifying element (20) configured to modify stray light traveling laterally through the layer stack,
**characterized in** the stray light modifying element (20) comprises or consists of an anti-lightguide surface structure formed in or on at least one surface selected from the upper surface of the carrier substrate (13) and the upper and lower surfaces of the material layers of the layer stack, the anti-lightguide surface structure being configured to reduce specular reflections of the stray light at the selected surface.

2. The optical component of claim 1, wherein the anti-lightguide surface structure is a generally planar structure extending essentially parallel to the lateral plane (xy).

3. The optical component of claim 1 or 2, wherein the stray light modifying element (20) is configured to deflect or diffusely scatter at least a portion of the stray light away from the lateral plane (xy).

4. The optical component of any one of the preceding claims, wherein the stray light modifying element (20) is configured to absorb at least a portion of the stray light.

5. The optical component of any one of the preceding claims, wherein the anti-lightguide surface structure is a meta-optical surface structure (31).

6. The optical component of any one of the preceding claims, wherein the stray light modifying element is a meta-optical absorber comprising:
a dielectric layer (152);
a first metal layer (52) arranged on a first surface of the dielectric layer (152), the first metal layer being structured to comprise a plurality of resonators; and
a second metal layer (51) arranged on a second surface of the dielectric layer (152),
wherein preferably the dielectric layer (152) is part of the membrane (15).

7. The optical component of any one of the preceding claims,
wherein the anti-lightguide surface structure is formed in or on the upper surface of the carrier substrate (13),
in particular, wherein the anti-lightguide surface structure comprises at least one of:
a surface texturing formed in or on at least a portion of the upper surface, in particular, a roughening (21) of at least a portion of the upper surface;
a meta-optical surface structure (31) formed in or on at least a portion of the upper surface; and
a black silicon modification (42) formed in or on at least a portion of the upper surface.

8. The optical component of any one of the preceding claims,
wherein the anti-lightguide surface structure is formed in or on an upper surface of the membrane (15),
in particular, wherein the anti-lightguide surface structure comprises at least one of:
a surface texturing formed in or on at least a portion of the upper surface of the membrane (15); and
a meta-optical surface structure formed in or on at least a portion of the upper surface of the membrane (15),
wherein preferably the cavity-spanning portion (151) of the membrane (15) is thicker than an adjacent portion (152) of the membrane (15) on or in which the anti-lightguide surface structure is formed.

9. The optical component of any one of the preceding claims, comprising an optical element (16) formed in or on the membrane (15), the optical element (16) configured to shape, diffuse, filter, and/or otherwise adjust light that impinges on the cavity-spanning portion of the membrane (15).

10. The optical component of claim 9,
wherein the optical element comprises a base layer (18) having a lower surface facing the membrane (15) and having an upper surface facing away from the membrane (15), and
wherein the anti-lightguide surface structure is formed in or on the upper surface of the base layer (18).

11. The optical element of claim 10,
wherein the anti-lightguide surface structure comprises a plurality of step-like structures (61), each step-like structure having a face (63) that is oriented relative to the lateral plane at an angle to allow stray light travelling essentially parallel to the lateral plane (xy) to escape from the base layer (18), or
wherein the anti-lightguide surface structure comprises a diffuser structure (65), in particular, a diffractive diffuser structure or a roughening, the diffuser structure configured to diffusely scatter the stray light into a plurality of different directions outside the base layer (18).

12. The optical component of any one of the preceding claims, further comprising a light detector (62) that is integrated at least partially within the upper surface of the carrier substrate (13),
wherein the stray light modifying element (20) is arranged between the cavity-spanning portion of the membrane (15) and the light detector (62) in a projection onto the lateral plane (xy).

13. A method of manufacturing a plurality of optical components (11) as defined in any one of claims 1-12, the method comprising:
providing a wafer comprising the carrier substrate (13);
creating, on the wafer, the layer stack and the stray light modifying elements of the optical components;
etching the wafer from a lower surface of the wafer to form an array of cavities (14) spanned by the membrane (15); and
dicing the wafer to obtain the plurality of optical components (11).

14. The method of claim 13, wherein creating the stray light modifying elements of the optical components comprises etching or grinding at least a portion of the upper surface of the carrier substrate (13) and/or etching or grinding at least a portion of the upper surface of one of the material layers of the layer stack to create the anti-lightguide surface structure.

15. The method of claim 13,
wherein the method comprises forming an optical element in or on the membrane (15), the optical element (16) configured to shape, diffuse, filter, and/or otherwise adjust light that impinges on the cavity-spanning portion of the membrane (15), the optical element (16) comprising a base layer (18) having a lower surface facing the membrane (15) and having an upper surface facing away from the membrane (15), and
wherein forming the anti-lightguide surface structure comprises imprinting the base layer (18) to create the anti-lightguide surface structure.
